# EUROPÄISCHE PATENTSCHRIFT

(11) **EP 1 852 283 B1**
(45) Veröffentlichungstag und Bekanntmachung des Hinweises auf die Patenterteilung: **25.02.2009**
(21) Anmeldenummer: 07008825.7
(22) Anmeldetag: 02.05.2007
(51) Int. Cl.: B60D 1/54, B60D 1/64

(54) **Elektrische Verbindungsvorrichtung für eine Anhängerkupplung**
Electric connecting device for a tow-bar fixture
Dispositif de raccordement électrique pour un attelage

(30) Priorität: 05.05.2006 DE 102006022500
(43) Veröffentlichungstag der Anmeldung: 07.11.2007
(73) Patentinhaber: WESTFALIA - Automotive GmbH, 33378 Rheda-Wiedenbrück (DE)
(72) Erfinder: Peitz, Jürgen, 33378 Rheda-Wiedenbrück (DE)
(74) Vertreter: Bregenzer, Michael

(56) Entgegenhaltungen:
- EP-A- 1 634 730
- WO-A-02/32744
- WO-A-20/05028220
- DE-A1- 10 344 253
- DE-U1-6202005 005 67

## Beschreibung

Die Erfindung betrifft eine elektrische Verbindungsvorrichtung für eine Anhängevorrichtung zum Anhängen eines Anhängers an ein Zugfahrzeug, mit einer Halteeinrichtung zur Befestigung am Zugfahrzeug und mit einer an der Halteeinrichtung zwischen einer Arbeitsposition und einer Ruheposition verstellbar angeordneten Steckverbindungseinrichtung, die in der Arbeitspoon zum Anstecken einer Anhänger-Steckvorrichtung des Anhängers zur Herstellung einer elektrischen Verbindung zwischen dem Zugfahrzeug und dem Anhänger zugänglich ist.

Beispielsweise ist aus der DE 41 42 317 A1 eine Anhängevorrichtung mit einer gattungsgemäßen elektrischen Verbindungsvorrichtung bekannt, bei der eine Steckdose schwenkbar am Fahrzeug angeordnet ist. Beim Einstecken eines Kupplungsarms in eine Aufnahme am Fahrzeug schwenkt der Steckdosenhalter in seiner Arbeitsposition nach unten, so dass er vor einen Stoßfänger des Fahrzeugs vorsteht und zum Einstecken eines Anhänger-Steckverbinders zugänglich ist. Die bekannte Verbindungsvorrichtung braucht allerdings einen verhältnismäßig großen Bauraum. Eine platzsparende Unterbringung der Steckdose in der Ruhestellung ist nicht oder nur schwer zu bewerkstelligen.

Es ist daher die Aufgabe der vorliegenden Erfindung, eine flexibel einsetzbare, insbesondere flexibel verstellbare, Verbindungsvorrichtung für eine Anhängevorrichtung vorzuschlagen.

Zur Lösung der Aufgabe ist bei einer Verbindungsvorrichtung der eingangs genannten Art vorgesehen, dass die Steckverbindungseinrichtung an der Halteeinrichtung mit einer Mehrgelenkanordnung verstellbar gehaltert ist.

Die Verbindungsvorrichtung ermöglicht gegenüber der bekannten Verbindungsvorrichtung weitere Freiheitsgrade für die Bewegungsbahn der Steckverbindungseinrichtung zwischen der Arbeitsposition und der Ruheposition. Somit ist eine platzsparende Unterbringung der Steckverbindungseinrichtung in der Ruhestellung möglich. Ferner kann der Verstellweg trotz der platzsparenden Unterbringung in der Ruheposition groß sein. Beispielsweise ist mit Hilfe der Mehrgelenkanordnung ein weiter Verstellweg nach unten vor einen Stoßfänger des Zugfahrzeuges möglich, so dass die Steckverbindungseinrichtung vor den Stoßfänger nach unten und/oder nach hinten vor das Fahrzeug vorsteht, wo sie bequem zum Einstecken der Anhänger-Steckvorrichtung zugänglich ist.

Die Ruheposition der Steckverbindungseinrichtung befindet sich beispielsweise zwischen einem Stoßfänger des Fahrzeugs und einem Querträger, zwischen einem Querträger des Fahrzeugs und der Karosserie des Fahrzeugs, unterhalb des Fahrzeugs oder dergleichen.

Vorteilhaft ist nicht nur eine elektrische Verbindung, sondern auch eine optische Verbindung möglich.

Die Halteeinrichtung ist an dem Kraftfahrzeug, beispielsweise an einem Fahrzeugquerträger, befestigt oder befestigbar.

Besonders zweckmäßig ist eine Mehrgelenkanordnung, die mindestens einen Lenkhebel und mindestens einen Steuerhebel umfasst. Der Lenkhebel und der Steuerhebel sind beispielsweise in der Art einer Viergelenkanordnung angeordnet. Es versteht sich, dass auch weitere Gelenke, vorteilhaft beispielsweise sieben Gelenke, scherenartige Anordnungen oder dergleichen denkbar sind. Der Lenkhebel und der Steuerhebel haben zweckmäßigerweise jeweils zwei zueinander beabstandete Gelenke. Sofern nur ein einziger Steuerhebel und ein einziger Lenkhebel vorhanden sind, sind diese gelenkig einerseits an der Halteeinrichtung und andererseits an der Steckverbindungseinrichtung angelenkt.

Abstände zwischen den Gelenken der Mehrgelenkanordnung können unterschiedlich sein. So kann beispielsweise der Abstand zwischen den Gelenken des mindestens einen Lenkhebels größer sein als der Abstand zwischen den Gelenken des mindestens einen Steuerhebels oder umgekehrt.

Zum Halten der Steckverbindungseinrichtung in der Ruhestellung oder der Arbeitsstellung können verschiedene Anschläge vorgesehen sein. Beispielsweise kann ein Anschlag an der Steckverbindungseinrichtung vorgesehen sein, an den der Steuerhebel oder der Lenkhebel in der Ruhestellung oder der Arbeitsstellung anschlägt.

Ferner können ein Steuerhebel und/oder ein Lenkhebel einen Anschlagarm aufweisen, der in der Arbeitsstellung oder der Ruhestellung an einen Anschlag der fahrzeugseitigen Halteeinrichtung oder der Steckverbindungseinrichtung anschlägt. Der Anschlagarm und ein Schwenkarm eines jeweiligen Steuerhebels oder Lenkhebels sind zweckmäßigerweise an einander entgegengesetzten Seiten eines Gelenks angeordnet. Dieses Gelenk kann an der fahrzeugseitigen Halteeinrichtung oder der Steckverbindungseinrichtung vorgesehen sein. Beispielsweise kann sich der Schwenkarm zwischen der fahrzeugseitigen Halteeinrichtung und der Steckverbindungseinrichtung erstrecken.

Die Gelenke an der fahrzeugseitigen Halteeinrichtung für den Steuerhebel und den Lenkhebel können unterschiedliche Vertikal- und/oder Horizontalpositionen aufweisen. So können die Gelenke beispielsweise schräg zu einer Querachse des Fahrzeuges stehen. Beispielsweise ist der Lenkhebel an einem Basisbereich der fahrzeugseitigen Halteeinrichtung und der Steuerhebel an einem nach unten vor den Basisbereich vorstehenden Arm der fahrzeugseitigen Halteeinrichtung gelenkig angelenkt. Durch die Position der Gelenke wird ein Bewegungsweg der Steckeinrichtung bestimmt.

Die Gelenke des mindestens einen Steuerhebels und des mindestens einen Lenkhebels können auch an der Steckverbindungseinrichtung unterschiedliche Vertikalpositionen und/oder Horizontalpositionen aufweisen. Dies bezieht sich auf die Ruheposition und/oder die Arbeitsposition der Steckverbindungseinrichtung.

Beispielsweise können die Gelenke an der fahrzeugseitigen Halteeinrichtung und an der Steckeinrichtung in Eckbereichen eines Parallelogrammes angeordnet sein. Das Parallelogramm kann schräg stehen. Der Begriff "Parallelogramm" ist hierbei großzügig zu interpretieren, da beispielsweise auch zwei Hebel nur im Wesentlichen parallel zueinander, jedoch leicht schrägstehend sein können. Die Nicht-Parallelität ergibt sich z.B. dadurch, dass die Gelenke zweier Hebel unterschiedliche Längsabstände zueinander aufweisen.

Eine Steckdose der Steckverbindungseinrichtung kann zweckmäßigerweise einen im Wesentlichen vertikalen Verstellweg zwischen der Arbeitsposition und der Ruheposition aufweisen. Somit ist es möglich, dass in Fahrzeugquerrichtung verhältnismäßig wenig Bauraum zum Verstellen der Steckverbindungseinrichtung benötigt wird. Es versteht sich, dass auch ein Schwenken in Längsrichtung des Fahrzeugs oder schräg dazu denkbar ist.

Ferner sind überlagerte Linear- und Schwenk-Bewegungen oder dergleichen mit einer erfindungsgemäßen Mehrgelenkanordnung realisierbar. Beispielsweise kann zur Realisierung einer Linearbewegung mindestens eines der Gelenke einem in einem Langloch drehbar und linear verschiebliche Schwenkachse aufweisen.

In der Arbeitsposition und/oder in der Ruheposition kann die Steckverbindungseinrichtung durch eine Rasteinrichtung gehalten werden.

Bevorzugt ist eine Federeinrichtung, die die Steckverbindungseinrichtung in die Arbeitsposition und/oder die Ruheposition vorspannt. Diese Vorspannung kann auch über einen Totpunkt zwischen der Arbeitsposition und der Ruheposition führen.

Vorteilhafterweise verstellt die mindestens eine Federeinrichtung die Steckverbindungseinrichtung selbsttätig von der Ruheposition in die Arbeitsposition oder umgekehrt. Die Steckverbindungseinrichtung bewegt sich sozusagen automatisch in die Ruheposition oder die Arbeitsposition in Abhängigkeit von der mindestens einen Federeinrichtung. Beispielsweise ist die Federeinrichtung zwischen den vor den Basisbereich der fahrzeugseitigen Halteeinrichtung vorstehenden Arm und dem Lenkhebel wirksam. Die Federeinrichtung zieht den Lenkhebel in Richtung des vorstehenden Armes der Halteeinrichtung.

Vorteilhaft ist auch, wenn die Verbindungsvorrichtung einen Stellantrieb zum Verstellen der Steckverbindungseinrichtung in die Ruheposition oder die Arbeitsposition aufweist. Einmanuelles Verstellen ist auch möglich.

Die Anhängevorrichtung kann einen festen oder einen abnehmbaren Kupplungsarm aufweisen. Besonders bevorzugt ist eine Bauform, bei der die Anhängevorrichtung einen mittels einer Verstellanordnung zwischen einer Betriebsposition zum Anhängen eines Anhängers und einer Nicht-Betriebsposition mittels einer Verstellanordnung schwenkbaren Kupplungsarm mit einer Kupplungskugel aufweist. Beim Verstellen von der Betriebsposition in die Nichtbetriebsposition oder umgekehrt nehmen der Kupplungsarm und/oder die Verstellanordnung die Steckverbindungseinrichtung von der Ruheposition in die Arbeitsposition oder umgekehrt mit. Dieses Mitnehmen kann direkt oder indirekt erfolgen, beispielsweise indem der Kupplungsarm unmittelbar auf die Steckverbindungseinrichtung wirkt. Aber auch ein Mitnehmer, z.B. ein Bolzen, der an einer Haltepartie des Kupplungsarms angeordnet ist und vor diese Haltepartie vorsteht, kann die Steckverbindungseinrichtung zwischen ihrer Arbeitsposition und der Ruheposition mitnehmen. Bevorzugt ist eine Bauform, bei der ein sich zwischen der Kupplungskugel und einer fahrzeugseitigen Haltepartie des Kupplungsarms erstreckender Kupplungsarmabschnitt des Kupplungsarms die Steckverbindungseinrichtung mitnimmt.

Die Verstellanordnung hat zweckmäßigerweise eine solche Kinematik, dass sie den Kupplungsarm bei einem Verstellen von der Betriebsposition in die Nicht-Betriebsposition in eine gegenüber der Betriebsposition nach schräg unten geneigte Stellung verstellt, so dass der Kupplungsarm die Steckverbindungseinrichtung untergreifen kann. Erst wenn die Schrägstellung erreicht ist, schwenkt der Kupplungsarm in einen Bereich unterhalb der Steckverbindungseinrichtung und erfasst die Steckverbindungseinrichtung sozusagen von unten.

Die Steckverbindungseinrichtung ist vorteilhafterweise an einer Trägereinrichtung angeordnet, beispielsweise einer Trägerplatte oder eine Trägerbaugruppe. Die Steckverbindungseinrichtung bildet zweckmäßigerweise eine von der Anhängevorrichtung separate Baueinheit. Insbesondere ist es vorteilhaft, wenn die Steckverbindungseinrichtung eine von dem Kupplungsarm separate Baugruppe bildet. Es versteht sich, dass auch eine Bauform denkbar ist, bei der beispielsweise ein Basisteil der Anhängevorrichtung, z.B. ein Halter für den Kupplungsarm, die Halteeinrichtung bildet oder enthält.

Mindestens ein Hebel der Mehrgelenkanordnung ist zweckmäßigerweise nicht nur an einem Gelenk geführt, sondern durch mindestens eine zusätzliche Führung geführt und/oder gestützt. Die Führungen können im Bereich der Gelenke angeordnet sein. Auch eine Führung entfernt von den Gelenken ist vorteilhaft. Die Führung stützt die Hebel bzw. die Mehrgelenkanordnung insbesondere in der Arbeitsposition, so dass eine Unterstützung beim Einstecken der Anhänger-Steckvorrichtung in die Steckverbindungseinrichtung der fahrzeugseitigen Verbindungsvorrichtung vorhanden ist. Die Stützwirkung ist insbesondere entgegen der Einsteckrichtung der Anhänger-Steckvorrichtung in die fahrzeugseitige Steckverbindungseinrichtung vorteilhaft, beispielsweise in Längsrichtung des Fahrzeugs oder - bei einer schrägstehenden Steckverbindungseinrichtung - entsprechend schräg zu dieser Längsrichtung. Ein Hebel kann beispielsweise zwischen zwei plattenartigen Teilen, z.B. der Halteeinrichtung und einer vorverlaufenden parallelen Führungsplatte geführt sein.

Mindestens ein Hebel der Mehrgelenkanordnung weist zweckmäßigerweise eine plattenartige Gestalt auf. Auch stangenartige Hebel, Hebel mit Rundprofilen oder dergleichen sind denkbar.

Nachfolgend wird ein Ausführungsbeispiel der Erfindung anhand der Zeichnung erläutert. Es zeigen:
- Figur 1: eine Anhängevorrichtung mit einer elektrischen Verbindungsvorrichtung von hinten, wobei ein Kupplungsarm in einer Betriebsstellung und eine Steckverbindungseinrichtung in ihrer Arbeitsstellung stehen,
- Figur 2: ausschnittsweise die Anhängevorrichtung gemäß Figur 1, wobei der Kupplungsarm teilweise in Richtung der Nicht-Betriebsstellung verschwenkt und die Steckverbindungseinrichtung in Richtung ihrer Ruheposition verstellt ist, und
- Figur 3: ausschnittsweise die Anhängevorrichtung gemäß Figur 1, wobei der Kupplungsarm in seine Nicht-Betriebsstellung verschwenkt und die Steckverbindungseinrichtung in ihre Ruheposition verstellt sind.

Eine Anhängevorrichtung 10 mit einer Anhängekupplung 11 zum Anhängen eines Anhängers 13 an ein Fahrzeug 14 und einer elektrischen Verbindungsvorrichtung 12 zur elektrischen Verbindung des Fahrzeugs 14 mit dem Anhänger 13 sind an dem Fahrzeug 14 befestigt, beispielsweise an einem hinteren Querträger 15 des Fahrzeugs 14 oder einem sonstigen tragenden Bauteil des Fahrzeugs 14.

Der Anhänger 13 ist an einer Kupplungskugel 17 einer Kupplungsarms 16 der Anhängekupplung 11 lösbar befestigbar. Die Kupplungskugel 17 und eine Haltepartie 18 des Kupplungsarms 16 sind an einander entgegengesetzten Endbereichen des Kupplungsarms 16 angeordnet. Zwischen diesen Endbereichen erstreckt sich ein unterer horizontaler Kupplungsarmabschnitt 19 sowie ein hochstehender Kupplungsarmabschnitt 20, an dessen oberen Ende die Kupplungskugel 17 angeordnet ist.

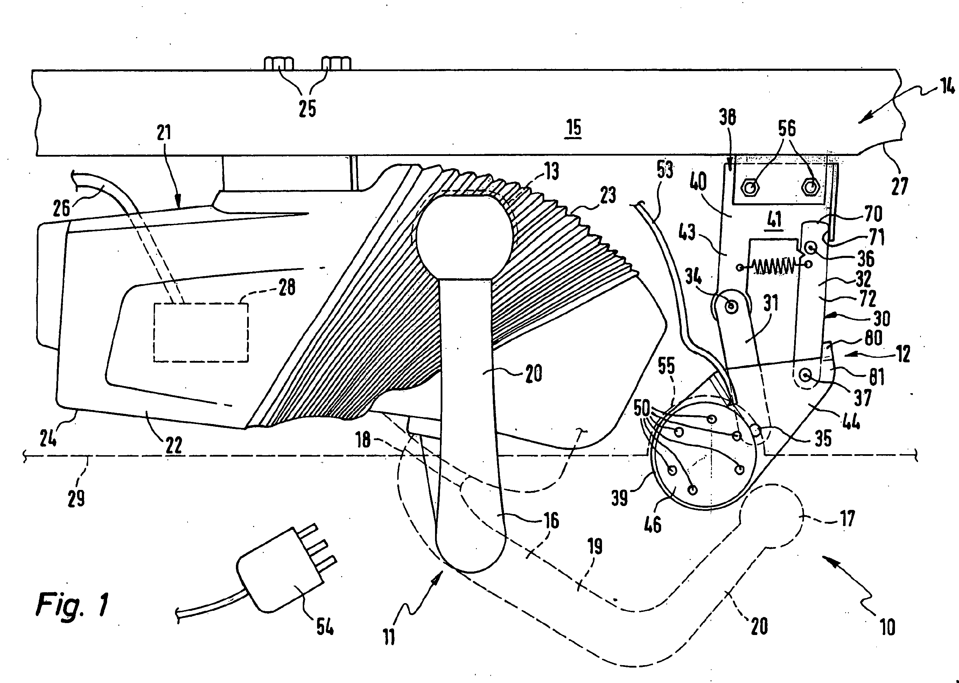

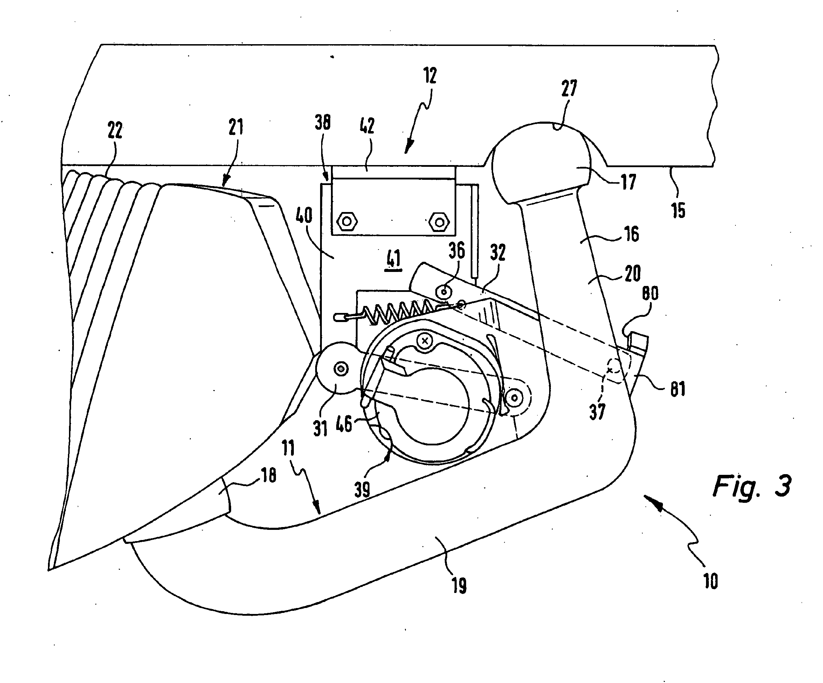

Mit Hilfe einer Verstellanordnung 21, die zweckmäßigerweise mindestens einen Antrieb und/oder mindestens ein Getriebe enthält, ist der Kupplungsarm 16 zwischen einer in Figur 1 mit durchgezogenen Linien dargestellten Betriebsstellung und einer in Figur 3 dargestellten Nicht-Betriebsstellung verstellbar. Besonders bevorzugt ist eine Verstellanordnung in der in der deutschen Patentanmeldung DE 10 2004 051 976 A1 beschriebenen Art, wobei auch andersartige Verstellanordnungen mit andersartigen Kinematiken möglich sind.

Die Verstellanordnung 21 ist in einer zweckmäßigerweise zumindest teilweise elastisch verformbaren Schutzhülle bzw. einem Gehäuse 22 untergebracht, so dass ihre Komponenten nicht sichtbar sind. Die Schutzhülle 22 hat beispielsweise einen Faltenbalgbereich 23, der ein Verstellen des Kupplungsarms 16 ermöglicht. Ein hinterer Bereich 24 der Schutzhülle 22 kann im wesentlichen unverformbar fest sein. Die Bereiche 23, 24 können mittels Rast- und/oder Klebeverbindungen miteinander verbunden sein.

Die Verstellanordnung 21 ist beispielsweise mittels Bolzen 25 an dem Querträger 15 befestigt. Im hinteren Bereich 24 durchdringt eine elektrische Anschlussleitung 26 das Gehäuse 22. Die Leitung 26 enthält beispielsweise Energieversorgungs- und/oder Steuerleitungen für einen elektrischen Antrieb 28 der Verstellanordnung 21.

Die Verstellanordnung 21 verschwenkt den Kupplungsarm 16 von der Betriebsstellung in die Nicht-Betriebsstellung und umgekehrt. In der Betriebsstellung steht der Kupplungsarm etwa in Fahrzeuglängsrichtung des Fahrzeugs 14. Der Kupplungsarmabschnitt 19 hat in der Betriebsstellung eine im Wesentlichen horizontale Lage. Beim Verstellen in Richtung der Nicht-Betriebsstellung schwenkt die Verstellanordnung 21 den Kupplungsarm 16 in einem ersten Bewegungsabschnitt nach schräg unten und verschwenkt ihn quer zur Fahrzeuglängsrichtung, so dass er die in Figur 1 gestrichelt eingezeichnete Stellung einnimmt. Diese beiden Bewegungen können einander überlagern. Jedenfalls ist es bevorzugt, dass der Kupplungsarm 16 am Ende des ersten Bewegungsabschnittes eine Position unterhalb der Verbindungsvorrichtung 12 einnimmt.

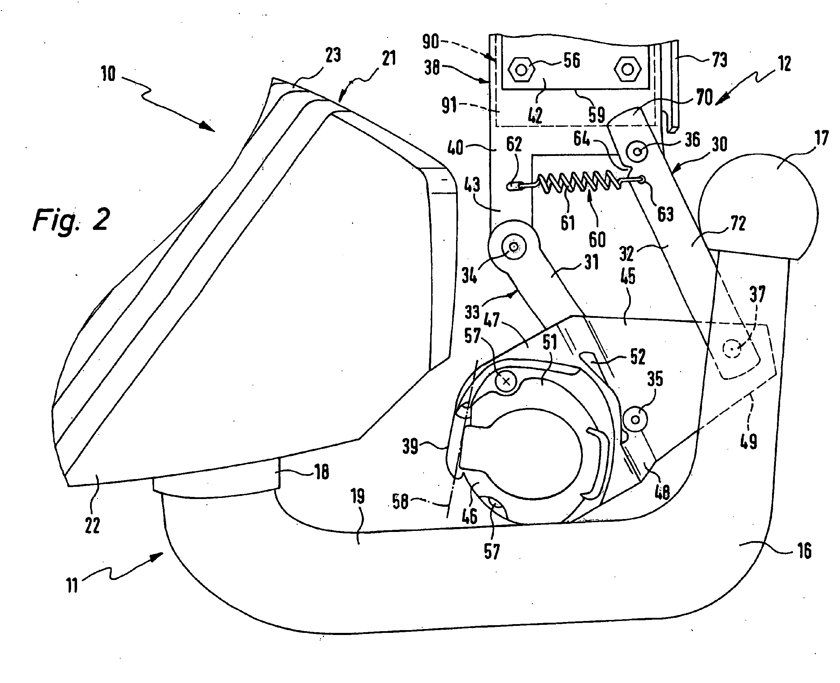

Sodann schwenkt die Verstellanordnung 21 den Kupplungsarm 16 nach oben, beispielsweise in Richtung des Querträgers 15. Dabei nimmt der Kupplungsarm 16 die Verbindungsvorrichtung 12 in Richtung ihrer Ruheposition (siehe Figuren 2, 3) mit, bis der Kupplungsarm 16 seine Nicht-Betriebsstellung einnimmt. In der Nicht-Betriebsstellung greift die Kupplungskugel 17 beispielsweise in eine Aufnahme 27 am Querträger 15 ein. In der Nicht-Betriebsstellung ist der Kupplungsarm 16 im Wesentlichen hinter einem Stoßfänger 29 des Fahrzeugs 14 positioniert. Bei einem umgekehrten Schwenkvorgang von der Nicht-Betriebsstellung in Richtung der Betriebsstellung (Figur 1) taucht der Kupplungsarm 16 wieder aus dem Ruheraum hinter dem Stoßfänger 29 vor, bis die Kupplungskugel 17 wieder vor (von hinten gesehen) dem Stoßfänger 29 steht.

Die elektrische Verbindungsvorrichtung 12 wird also, wie oben beschrieben, von der Anhängekupplung 12 in Richtung ihrer Ruhestellung hinter dem Stoßfänger 29 verstellt. Die Steckverbindungseinrichtung 39 wird von dem Kupplungsarm 16 in ihrer Ruheposition gehalten.

Die Bewegung in umgekehrter Richtung, von der Ruheposition in die Arbeitsposition (Figur 1) führt die Verbindungsvorrichtung 12 selbsttätig aus, so dass in der Arbeitsposition eine Steckverbindungseinrichtung 39 zum Anstecken einer Anhänger-Steckverbindung 54 zugänglich ist. Beispielsweise schwenkt die Steckverbindungseinrichtung 39 in einen Bereich unterhalb des Stoßfängers 29 oder in den Bereich eines Ausschnittes 55 des Stoßfängers 29.

Die Steckverbindungseinrichtung 39 ist flexibel und raumsparend von der Ruheposition in die Arbeitsposition und umgekehrt beweglich. Zu diesem Zweck weist sie eine Mehrgelenkanordnung 30 auf, die zweckmäßigerweise ein Viergelenk 33 enthält. Ein Steuerhebel 31 sowie ein Lenkhebel 32 des viergelenks 33 sind gelenkig einerseits an der Steckverbindungseinrichtung 39 und anderseits an der Halteeinrichtung 38 verbunden. Der Steuerhebel 31 ist mit Gelenken 34, 35, der Lenkhebel 32 ist mit Gelenken 36, 37 mit der Halteeinrichtung 38 und der Steckverbindungseinrichtung 39 gelenkig verbunden. Die Gelenke 34, 35 sowie 36, 37 sind zueinander beabstandet und zweckmäßigerweise jeweils in den Endbereichen der Hebel 31, 32 positioniert.

Die Gelenke 34-37 sind beispielsweise als ein Spiel aufweisende Nietverbindungen realisiert. Auch endseitig umgebördelte oder mit (Schraub-)-Köpfen versehene Bolzen, Schraubverbindungen oder dergleichen sind als Gelenke denkbar.

Zweckmäßigerweise sind die Hebel 31, 32 und/oder die Halteeinrichtung 38 und/oder die Steckverbindungseinrichtung 39 im Bereich der Gelenke 34-37 verstärkt und weisen beispielsweise größere Auflageflächen auf.

Die Halteeinrichtung 31 enthält beispielsweise eine Platte 40, die einen Basisbereich 41 bildet. Die Platte 40 ist an einem nach unten vor den Querträger 15 vorstehenden Schenkel 59 des Winkelstücks 42 befestigt, z.B. angeschweißt oder mittels Bolzen 56 angeschraubt.

Vor den Basisbereich 41 steht ein Arm 43 der Platte 40 vor. Das den Steuerhebel 31 mit der Halteeinrichtung 38 verbindende Gelenk 34 ist am vorderen Endbereich des Armes 43 angeordnet.

An einer Trägerplatte 45, die eine Trägereinrichtung 44 der Steckverbindungseinrichtung 39 bildet, ist eine Steckdose 46 zum Einstecken der Anhänger-Vorrichtung 54 angeordnet. Die Steckdose 46 ist beispielsweise an einen Tragbereich 47 der Trägerplatte 45 mit Schrauben 57 angeschraubt. Eine Außenkontur des Tragbereiches 47 korreliert mit einer Außenkontur der Steckdose 46. Neben dem Tragbereich 47 befindet sich ein Gelenkbereich 49, an dem die Hebel 31, 32 mittels der Gelenke 35, 37 an der Trägerplatte 45 gelenkig befestigt sind.

Eine Stufe 48 zwischen den Bereichen 47 und 49 hat zweckmäßigerweise eine Öffnung oder einen Durchbruch, der als Kabeldurchführung 52 für eine nur in Figur 1 eingezeichnete Anschlussleitung 53 der Steckdose 46 dient. Aufgrund der Stufe 48 stehen der Tragbereich 47 und somit die Steckdose 46 näher zu einem Nutzer der Anhängevorrichtung 10 vor. Steckkontakte 50 bzw. -buchsen der Steckdose 46 sind mit einem in Figur 1 nicht dargestellten Deckel 51 verschließbar und vor Umwelteinflüssen schützbar. Der Deckel 51 ist zweckmäßigerweise ein Klappdeckel, der um eine Achse 58 schwenkbar ist.

Die beiden oberen Gelenke 34, 36 sowie die beiden unteren Gelenke 35 und 37 sind horizontal zueinander beabstandet. Zudem haben sie einen vertikalen Abstand, so dass jeweils zwei Gelenke 34,36; 35, 37 schräg zur Horizontalen stehen. Bei der Halteeinrichtung 38 ist diese Schrägstellung durch den nach unten vorstehenden Arm 43 bewirkt. Die Gelenke 35, 37 sind in einer entsprechend schrägen Position an dem Gelenkbereich 49 der Trägerplatte 45 befestigt.

Durch die Positionierung der Gelenke 34-37 bezüglich der Halteeinrichtung 38, bezüglich der Hebel 31, 32 sowie bezüglich der Trägereinrichtung 44 wird die Bewegungskinematik der Mehrgelenkanordnung 30 bestimmt. Beispielsweise macht die Steckverbindungseinrichtung 39 im Wesentlichen eine Vertikalbewegung bzw. eine Hoch-Tief-Bewegung, wenn sie von der Arbeitsposition in die Ruheposition oder umgekehrt bewegt wird. Eine Drehlage oder Winkelposition der Steckdose 46 bleibt dabei vorteilhafterweise im Wesentlichen unverändert.

Die Trägerplatte 45 macht z.B. eine schiffschaukelartige Schwenkbewegung beim Verstellen von der Ruheposition in die Arbeitsposition und umgekehrt.

Eine Federeinrichtung 60 spannt die Verbindungsvorrichtung 12 in ihre Arbeitsposition vor, so dass die Steckverbindungseinrichtung 39 selbsttätig in die Arbeitsposition schwenkt, wenn der Kupplungsarm 16 in seine Betriebsstellung schwenkt. Eine Feder 61 der Federeinrichtung 60 greift einerseits an der Halteeinrichtung 38 und andererseits am Lenkhebel 32 an. Die Feder 61 ist eine Zugfeder, die beispielsweise in Ösen 62, 63 am Arm 43 und am Lenkhebel 32 eingehängt ist. Somit spannt die Feder 61 den Lenkhebel 32 in eine Vertikalposition vor und bewirkt ein Schwenken des Lenkhebels 32 um die Drehachse des Gelenks 36.

Das untere Gelenk 37 zwischen dem Lenkhebel 32 und der Steckverbindungseinrichtung 39 beschreibt dabei eine Kreisbahn um die Drehachse des Gelenks 35, erkennbar z.B. in Figur 2. Der Steuerhebel 31 bewirkt ein zusätzliches Verschwenken des Tragbereiches 47 zur Arbeitsposition hin, vorliegend in Vertikalrichtung, so dass die Steckdose 46 in der Arbeitsposition eine weit untenstehende Stellung einnimmt.

Beim Schwenken in die Ruheposition (Figuren 2, 3) beeinflusst der Steuerhebel 31 die Schwenkbewegung um den Lenkhebel 32 derart, dass der Tragbereich 47 bzw. die Steckdose 46 eine größere Vertikalbewegung macht, als dies ohne den Steuerhebel 31 der Fall wäre.

In der Arbeitsposition schlägt ein Anschlagarm 70 des Lenkhebels 32 an einen Anschlag 71 der Halteeinrichtung 38 an. Der Anschlagarm 70 und ein Schwenkarm 72 sind an einander entgegengesetzten Seiten des Gelenks 36 angeordnet. Beispielsweise bildet ein Winkel-Schenkel 73 der Halteeinrichtung 38 den Anschlag 71. Der Schenkel 73 erstreckt sich bis in einen Schwenkbereich des Anschlagarms 70, so dass der Lenkhebel 32 nicht über eine im Wesentlichen vertikale Position hinausschwenken kann. Der Winkel-Schenkel 79 ist beispielsweise ein seitlich umgebogener Abschnitt der Platte 40.

In der Arbeitsposition schlägt der Lenkhebel 32 an einen Anschlag 80 der Steckverbindungseinrichtung 39 an. Der Anschlag 80 ist durch einen abgewinkelten Endabschnitt 81 der Trägerplatte 45 gebildet. Der Anschlag 80 befindet sich an einem von dem Tragbereich 47 entfernten Endbereich der Trägerplatte 45. Deren Gelenkbereich 49 hat beispielsweise eine im Wesentlichen dreieckige Gestalt. An einem vom Tragbereich 47 entfernten Eckbereich ist die Trägerplatte 45 nasenartig abgewinkelt, um den Anschlag 80 zu bilden.

Die Zugspannung der Feder 61 hält den Anschlagarm 70 in der Arbeitsposition, bei der der Lenkhebel 32 an die Anschläge 71, 80 anschlägt und somit eine stabile Lage einnimmt.

Die Platte 40, die Hebel 31, 32 und/oder die Trägerplatte 45 sind zweckmäßigerweise aus Metall, insbesondere aus Metallblech, wobei auch Kunststoff oder sonstige Materialen möglich sind.

Zur Schaffung ausreichender Bewegungsräume bei der Gelenkanordnung 30 können beispielsweise Öffnungen, zurückversetzte Abschnitte, Einkerbungen oder dergleichen bei den Komponenten der Mehrgelenkanordnung 30 vorgesehen sein. So ist beispielsweise im Bereich des Gelenks 36 ein kerbenartiger Rücksprung 64 bzw. ein Aufnahmeraum für die Feder 61 in der Ruheposition der Mehrgelenkanordnung 30 vorgesehen.

Der Kupplungsarm 16 untergreift die Steckverbindungseinrichtung 39 beim Schwenken in seine Nicht-Betriebsstellung. Beispielsweise gleitet die Steckdose 46 am horizontal verlaufenden Kupplungsarmabschnitt 19 entlang. Es versteht sich, dass prinzipiell auch eine Anordnung denkbar ist, bei der der Kupplungsarm 16 auch an einer anderen Partie einer erfindungsgemäßen elektrischen Verbindungsvorrichtung angreift, um diese von der Arbeits- in die Ruheposition zu bewegen, beispielsweise an einer Trägereinrichtung in der Art der Trägerplatte 45, an einem der Hebel 31, 32 oder dergleichen.

Die Hebel 31, 32 sind optional durch eine Führung 90 geführt (Figur 2). Beispielsweise kann parallel beabstandet zur Platte 40 eine Führungsplatte 91 vorgesehen sein. Der Anschlagarm 70 des Lenkhebels 32 ist zwischen den Platten 40, 91 geführt.

Weitere Hebel, die beim Ausführungsbeispiel nicht dargestellt sind, erhöhen die Gelenkigkeit und somit auch die mechanischen Freiheitsgrade beim Verstellen einer erfindungsgemäßen elektrischen Verbindungsvorrichtung.

## Patentansprüche

1. Elektrische Verbindungsvorrichtung (12) für eine Anhängevorrichtung (10) zum Anhängen eines Anhängers (13) an ein Zugfahrzeug (14), mit einer Halteeinrichtung (38) zur Befestigung am Zugfahrzeug (14) und mit einer an der Halteeinrichtung (38) zwischen einer Arbeitsposition und einer Ruheposition verstellbar angeordneten Steckverbindungseinrichtung (39), die in der Arbeitsposition zum Anstecken einer Anhänger-Steckvorrichtung (54) des Anhängers (13) zur Herstellung einer elektrischen Verbindung zwischen dem Zugfahrzeug (14) und dem Anhänger (13) zugänglich ist, **dadurch gekennzeichnet, dass** die Steckverbindungseinrichtung (39) an der Halteeinrichtung (38) mit einer Mehrgelenkanordnung (30) verstellbar gehaltert ist.

2. Verbindungsvorrichtung (12) nach Anspruch 1, **dadurch gekennzeichnet, dass** die Mehrgelenkanordnung (30) mindestens einen Lenkhebel (32) und mindestens einen Steuerhebel (31) umfasst, und dass der mindestens eine Steuerhebel (31) und der mindestens eine Lenkhebel (32) jeweils zwei zueinander beabstandete Gelenke (34-37) aufweisen.

3. Verbindungsvorrichtung nach Anspruch 2, **dadurch gekennzeichnet, dass** der mindestens eine Steuerhebel (31) und der mindestens eine Lenkhebel (32) jeweils mit einem Gelenk (34, 36) an der fahrzeugseitigen Halteeinrichtung (38) und einem Gelenk (35, 37) an der Steckverbindungseinrichtung (39) gelenkig angeordnet sind.

4. Verbindungsvorrichtung nach Anspruch 2 oder 3, **dadurch gekennzeichnet, dass** ein Abstand zwischen den Gelenken (36, 37) des mindestens einen Lenkhebels (32) größer als ein Abstand zwischen den Gelenken (34, 35) des mindestens einen Steuerhebels (31) ist oder umgekehrt.

5. Verbindungsvorrichtung nach einem der Ansprüche 2 bis 4, **dadurch gekennzeichnet, dass** die Steckverbindungseinrichtung (39) mindestens einen Anschlag (71, 80) aufweist, der in der Ruhestellung oder der Arbeitstellung an dem mindestens einen Steuerhebel (31) oder dem mindestens einen Lenkhebel (32) anschlägt (71, 80).

6. Verbindungsvorrichtung nach einem der Ansprüche 2 bis 5, **dadurch gekennzeichnet, dass** der mindestens eine Steuerhebel (31) und/oder der mindestens eine Lenkhebel (32) einen Anschlagarm (70) aufweisen, der in der Ruhestellung und/oder der Arbeitstellung an einem Anschlag der fahrzeugseitigen Halteeinrichtung (38) oder der Steckverbindungseinrichtung (39) anschlägt.

7. Verbindungsvorrichtung nach Anspruch 6, **dadurch gekennzeichnet, dass** der Anschlagarm (70) einerseits eines Gelenks (36) an der fahrzeugseitigen Halteeinrichtung (38) und ein Schwenkarm (72) anderseits des Gelenks (36) angeordnet sind, und dass sich der Schwenkarm (72) zwischen der fahrzeugseitigen Halteeinrichtung (38) und der Steckverbindungseinrichtung (39) erstreckt.

8. Verbindungsvorrichtung nach einem der Ansprüche 2 bis 7, **dadurch gekennzeichnet, dass** die Gelenke (34, 36) des mindestens einen Steuerhebels (31) und des mindestens einen Lenkhebels (32) an der fahrzeugseitigen Halteeinrichtung (38) unterschiedliche Vertikalpositionen aufweisen.

9. Verbindungsvorrichtung nach einem der Ansprüche 2 bis 8, **dadurch gekennzeichnet, dass** der mindestens eine Lenkhebel (32) an einem Basisbereich (41) der fahrzeugseitigen Halteeinrichtung (38) und der mindestens eine Steuerhebel (31) an einem unten vor den Basisbereich (41) vorstehenden Arm (43) der fahrzeugseitigen Halteeinrichtung (38) angelenkt sind.

10. Verbindungsvorrichtung nach einem der Ansprüche 2 bis 9, **dadurch gekennzeichnet, dass** die Gelenke (35, 37) des mindestens einen Steuerhebels (31) und des mindestens einen Lenkhebels (32) an der Steckverbindungseinrichtung (39) unterschiedliche Vertikalpositionen aufweisen.

11. Verbindungsvorrichtung nach einem der Ansprüche 2 bis 10, **dadurch gekennzeichnet, dass** die Gelenke (34-37) in Eckbereichen eines insbesondere schrägstehenden Parallelogramms angeordnet sind.

12. Verbindungsvorrichtung nach einem der vorhergehenden Ansprüche, **dadurch gekennzeichnet, dass** mindestens ein Hebel (32) der Mehrgelenkanordnung (30) an einer Führung (90) geführt ist.

13. Verbindungsvorrichtung nach Anspruch 12, **dadurch gekennzeichnet, dass** die Führung (90) einen Bereich (70) des mindestens einen Hebels (32) neben seinem ihn mit der Halteeinrichtung (38) oder der Steckverbindungseinrichtung (39) verbindenden Gelenk (36) führt.

14. Verbindungsvorrichtung nach einem der vorhergehenden Ansprüche, **dadurch gekennzeichnet, dass** mindestens ein Hebel (31, 32) der Mehrgelenkanordnung (30) eine plattenartige Gestalt aufweist.

15. Verbindungsvorrichtung nach einem der vorhergehenden Ansprüche, **dadurch gekennzeichnet, dass** eine Steckdose (46) der Steckverbindungseinrichtung (39) auf einem im wesentlichen vertikalen Verstellweg zwischen der Arbeitsposition und der Ruheposition verstellbar ist.

16. Verbindungsvorrichtung nach einem der vorhergehenden Ansprüche, **dadurch gekennzeichnet, dass** sie eine Rasteinrichtung zum Halten der Steckverbindungseinrichtung (39) in der Arbeitsposition und/oder in der Ruheposition aufweist.

17. Verbindungsvorrichtung nach einem der vorhergehenden Ansprüche, **dadurch gekennzeichnet, dass** die Steckverbindungseinrichtung (39) durch mindestens eine Federeinrichtung (60) in die Arbeitsposition und/oder in die Ruheposition vorgespannt ist.

18. Verbindungsvorrichtung nach Anspruch 17, **dadurch gekennzeichnet, dass** die mindestens eine Federeinrichtung (60) die Steckverbindungseinrichtung (39) selbsttätig von der Ruheposition in die Arbeitsposition verstellt oder umgekehrt.

19. Verbindungsvorrichtung nach Anspruch 17 oder 18, **dadurch gekennzeichnet, dass** die mindestens eine Federeinrichtung (60) zwischen dem vor den Basisbereich (41) der fahrzeugseitigen Halteeinrichtung (38) vorstehenden Arm (43) und dem Lenkhebel (32) wirksam ist.

20. Verbindungsvorrichtung nach einem der vorhergehenden Ansprüche, **dadurch gekennzeichnet, dass** die Anhängevorrichtung (10) eine Anhängekupplung (11) mit einem zwischen einer Betriebsposition zum Anhängen eines Anhängers (13) und einer Nicht-Betriebsposition mittels einer Verstellanordnung (21) schwenkbaren Kupplungsarm (16) mit einer Kupplungskugel (17) aufweist, und dass der Kupplungsarm (16) oder die Verstellanordnung (21) bei einem Verstellen von der Betriebsposition in die Nicht-Betriebsposition die Steckverbindungseinrichtung (39) in deren Ruheposition und/oder bei einem Verstellen von der Nicht-Betriebsposition in die Betriebsposition die Steckverbindungseinrichtung (39) in deren Arbeitsposition direkt oder indirekt mitnimmt.

21. Verbindungsvorrichtung nach Anspruch 20, **dadurch gekennzeichnet, dass** ein sich zwischen der Kupplungskugel (17) und einer fahrzeugseitigen Haltepartie (18) erstreckender Kupplungsarmabschnitt (19) des Kupplungsarms (16) die Steckverbindungseinrichtung (39) mitnimmt.

22. Verbindungsvorrichtung nach Anspruch 20 oder 21, **dadurch gekennzeichnet, dass** die Verstellanordnung (21) den Kupplungsarm (16) zum Untergreifen der Steckverbindungseinrichtung (39) bei einem Verstellen von der Betriebsposition in die Nicht-Betriebsposition in eine gegenüber der Betriebsposition nach schräg unten geneigte Stellung verstellt.

23. Verbindungsvorrichtung nach einem der vorhergehenden Ansprüche, **dadurch gekennzeichnet, dass** die Steckverbindungseinrichtung (39) eine an einer Trägereinrichtung (44), insbesondere an einer Trägerplatte (45), angeordnete Steckdose (46) aufweist.

24. Anhängevorrichtung mit einer Verbindungsvorrichtung (12) nach einem der vorhergehenden Ansprüche.

## Claims

1. Electrical connecting device (12) for a coupling device (10) for attaching a trailer (13) to a towing vehicle (14), with a retaining device (38) for securing to the towing vehicle (14) and with a plug-and-socket connector (39) mounted on the retaining device (38) for adjustment between a working position and an idle position, which is accessible in the working position for the insertion of a trailer plug (54) of the trailer (13) to establish an electrical connection between the towing vehicle (14) and the trailer (13), **characterised in that** the plug-and-socket connector (39) is adjustably held on the retaining device (38) by means of a multi-linkage arrangement (30).

2. Connecting device (12) according to claim 1, **characterised in that** the multi-linkage arrangement (30) includes at least one steering lever (32) and at least one control lever (31), and **in that** the at least one control lever (31) and the at least one steering lever (32) are each provided with two spaced joints (34 - 37).

3. Connecting device according to claim 2, **characterised in that** the at least one control lever (31) and the at least one steering lever (32) are each hinged to the retaining device (38) on the vehicle by one joint (34, 36) and to the plug-and-socket connector (39) by the other joint (35, 37).

4. Connecting device according to claim 2 or 3, **characterised in that** a distance between the joints (36, 37) of the at least one steering lever (32) is greater than a distance between the joints (34, 35) of the at least one control lever (31) and vice versa.

5. Connecting device according to any of claims 2 to 4, **characterised in that** the plug-and-socket connector (39) is provided with at least one stop (71, 80), which strikes against the at least one control lever (31) or the at least one steering lever (32) in the idle position or in the working position.

6. Connecting device according to any of claims 2 to 5, **characterised in that** the at least one control lever (31) and/or the at least one steering lever (32) are/is provided with a stop arm (70), which strikes against a stop of the retaining device (38) on the vehicle in the idle position and/or in the working position.

7. Connecting device according to claim 6, **characterised in that** the stop arm (70) is located on one side of a joint (36) on the retaining device (38) on the vehicle and a swivel arm (72) is located on the other side of the joint (36), and **in that** the swivel arm (72) extends between the retaining device (38) on the vehicle and the plug-and-socket connector (39).

8. Connecting device according to any of claims 2 to 7, **characterised in that** the joints (34, 36) of the at least one control lever (31) and the at least one steering lever (32) have different vertical positions on the retaining device (38) on the vehicle.

9. Connecting device according to any of claims 2 to 8, **characterised in that** the at least one steering lever (32) is hinged to a base region (41) of the retaining device (38) on the vehicle and the at least one control lever (31) is hinged to an arm (43) of the retaining device (38) on the vehicle, which projects below the base region (41).

10. Connecting device according to any of claims 2 to 9, **characterised in that** the joints (35, 37) of the at least one control lever (31) and the at least one steering lever (32) have different vertical positions on the plug-and-socket connector (39).

11. Connecting device according to any of claims 2 to 10, **characterised in that** the joints (34 - 37) are disposed in corner regions of an in particular inclined parallelogram.

12. Connecting device according to any of the preceding claims, **characterised in that** at least one lever (32) of the multi-linkage arrangement (30) is guided on a guide (90).

13. Connecting device according to claim 12, **characterised in that** the guide (90) guides a region (70) of the at least one lever (32) adjacent to the joint (36) linking it to the retaining device (38) or to the plug-and-socket connector (39).

14. Connecting device according to any of the preceding claims, **characterised in that** at least one lever (31, 32) of the multi-linkage arrangement (30) is plate-shaped.

15. Connecting device according to any of the preceding claims, **characterised in that** a socket (46) of the plug-and-socket connector (39) is adjustable between the working position and the idle position along a substantially vertical path.

16. Connecting device according to any of the preceding claims, **characterised in that** it is provided with a locking device for holding the plug-and-socket connector (39) in the working position and/or in the idle position.

17. Connecting device according to any of the preceding claims, **characterised in that** the plug-and-socket connector (39) is preloaded towards the working position and/or in the idle position by at least one spring device (60).

18. Connecting device according to claim 17, **characterised in that** the at least one spring device (60) automatically moves the plug-and-socket connector (39) from the idle position to the working position or vice versa.

19. Connecting device according to claim 17 or 18, **characterised in that** the at least one spring device (60) acts between the arm (43) projecting from the base region (41) of the retaining device (38) on the vehicle and the steering lever (32).

20. Connecting device according to any of the preceding claims, **characterised in that** the coupling device (10) comprises a trailer coupling (11) with a coupling arm (16) capable of swivelling by means of an adjusting arrangement (21) between an operative position for attaching a trailer and an inoperative position and provided with a hitch ball (17), and **in that** the coupling arm (16) or the adjusting arrangement (21), when moving from the operative to the inoperative position, directly or indirectly carries along the plug-and-socket connector (39) in its idle position, or, when moving from the inoperative to the operative position, directly or indirectly carries along the plug-and-socket connector (39) in its working position.

21. Connecting device according to claim 20, **characterised in that** a coupling arm section (19) of the coupling arm (16) which extends between the hitch ball (17) and a retaining section (18) on the vehicle carries along the plug-and-socket connector (39).

22. Connecting device according to claim 20 or 21, **characterised in that** the adjusting arrangement (21), when moving from the operative to the inoperative position, moves the coupling arm (16) into a position which is inclined downwards relative to the operative position in order to engage the plug-and-socket connector (39) from below.

23. Connecting device according to any of the preceding claims, **characterised in that** the plug-and-socket connector (39) comprises a socket (46) mounted on a support (44), in particular on a base plate (45).

24. Coupling device with a connecting device according to any of the preceding claims.

## Revendications

1. Dispositif de raccordement électrique (12) pour un attelage (10) destiné à atteler un véhicule tracté (13) à un véhicule tracteur (14), comportant un dispositif de fixation (38) pour fixation au véhicule tracteur (14) et un dispositif de raccordement par prise (39) disposé de manière réglable sur le dispositif de fixation (38) entre une position de travail et une position de repos, lequel dispositif de raccordement est accessible dans la position de travail pour raccorder un dispositif de raccordement de véhicule tracté (54) du véhicule tracté (13) pour réaliser un raccordement électrique entre le véhicule tracteur (14) et le véhicule tracté (13), **caractérisé en ce que** le dispositif de raccordement par prise (39) est fixé de manière réglable sur le dispositif de fixation (38) au moyen d'un agencement à articulations multiples (30).

2. Dispositif de raccordement (12) selon la revendication 1, **caractérisé en ce que** l'agencement à articulations multiples (30) comprend au moins un levier de guidage (32) et au moins un levier de commande (31), et **en ce que** le au moins un levier de commande (31) et le au moins un levier de guidage (32) présentent chacun deux articulations (34 à 37) espacées l'une de l'autre.

3. Dispositif de raccordement selon la revendication 2, **caractérisé en ce que** le au moins un levier de commande (31) et le au moins un levier de guidage (32) sont agencés de manière articulée grâce à une articulation (34, 36) au dispositif de fixation (38) côté véhicule et une articulation (35, 37) au dispositif de raccordement par prise (39).

4. Dispositif de raccordement selon la revendication 2 ou 3, **caractérisé en ce qu'**il existe un espacement entre les articulations (36, 37) du au moins un levier de guidage (32) qui est supérieur à un espacement entre les articulations (34, 35) du au moins un levier de commande (31) ou inversement.

5. Dispositif de raccordement selon l'une des revendications 2 à 4, **caractérisé en ce que** le dispositif de raccordement par prise (39) comporte au moins une butée (71, 80) arrêtant (71, 80) le au moins un levier de commande (31) ou le au moins un levier de guidage (32) dans la position de repos ou la position de travail.

6. Dispositif de raccordement selon l'une des revendications 2 à 5, **caractérisé en ce que** le au moins un levier de commande (31) et/ou le au moins un levier de guidage (32) comporte un bras de butée (70) venant en contact avec une butée du dispositif de fixation (38) côté véhicule ou du dispositif de raccordement par prise (39) dans la position de repos et/ou la position de travail.

7. Dispositif de raccordement selon la revendication 6, **caractérisé en ce que** le bras de butée (70) est disposé d'un côté d'une articulation (36) sur le dispositif de fixation (38) côté véhicule et qu'un bras pivotant (72) est disposé de l'autre côté de l'articulation (36), et **en ce que** le bras pivotant (72) s'étend entre le dispositif de fixation (38) côté véhicule et le dispositif de raccordement par prise (39).

8. Dispositif de raccordement selon l'une des revendications 2 à 7, **caractérisé en ce que** les articulations (34, 36) du au moins un levier de commande (31) et du au moins un levier de guidage (32) présentent des positions verticales différentes au niveau du dispositif de fixation (38) côté véhicule.

9. Dispositif de raccordement selon l'une des revendications 2 à 8, **caractérisé en ce que** le au moins un levier de guidage (32) est articulé à une zone de base (41) du dispositif de fixation (38) côté véhicule et le au moins un levier de commande (31) est articulé à un bras (43) faisant saillie sous la zone de base (41) du dispositif de fixation (38) côté véhicule.

10. Dispositif de raccordement selon l'une des revendications 2 à 9, **caractérisé en ce que** les articulations (35, 37) du au moins un levier de commande (31) et du au moins un levier de guidage (32) présentent des positions verticales différentes au niveau du dispositif de raccordement par prise (39).

11. Dispositif de raccordement selon l'une des revendications 2 à 10, **caractérisé en ce que** les articulations (34 à 37) sont disposées dans les zones d'angle d'un parallélogramme en particulier orienté obliquement.

12. Dispositif de raccordement selon l'une des revendications précédentes, **caractérisé en ce que** au moins un levier (32) de l'agencement à articulations multiples (30) est guidé pour une glissière (90).

13. Dispositif de raccordement selon la revendication 12, **caractérisé en ce que** la glissière (90) guide une zone (70) du au moins un levier (32) située à côté de son articulation (36) raccordée au dispositif de fixation (38) ou au dispositif de raccordement par prise (39).

14. Dispositif de raccordement selon l'une des revendications précédentes, **caractérisé en ce que** au moins un levier (31, 32) de l'agencement à articulations multiples (30) présente une forme plate.

15. Dispositif de raccordement selon l'une des revendications précédentes, **caractérisé en ce qu'**une prise de courant (46) du dispositif de raccordement par prise (39) peut être réglée sur une course de réglage sensiblement verticale entre la position de travail et la position de repos.

16. Dispositif de raccordement selon l'une des revendications précédentes, **caractérisé en ce qu'**il comporte un dispositif d'enclenchement pour maintenir le dispositif de raccordement par prise (39) dans la position de travail et/ou dans la position de repos.

17. Dispositif de raccordement selon l'une des revendications précédentes, **caractérisé en ce que** le dispositif de raccordement par prise (39) est sollicité par au moins un dispositif à ressort (60) dans la position de travail et/ou dans la position de repos.

18. Dispositif de raccordement selon la revendication 17, **caractérisé en ce que** le au moins un dispositif à ressort (60) déplace automatiquement le dispositif de raccordement par prise (39) de la position de repos dans la position de travail ou inversement.

19. Dispositif de raccordement selon la revendication 17 ou 18, **caractérisé en ce que** le au moins un dispositif à ressort (60) opère entre le bras (43) faisant saillie de la zone de base (41) du dispositif de fixation (38) côté véhicule et le levier de guidage (32).

20. Dispositif de raccordement selon l'une des revendications précédentes, **caractérisé en ce que** l'attelage (10) comporte un accouplement d'attelage (11) ayant un bras d'attelage (16) pouvant pivoter entre une position de fonctionnement pour atteler le véhicule tracté (13) et une position de non fonctionnement au moyen d'un agencement réglable (21) emportant une boule d'attelage (17), et **en ce que** le bras d'attelage (16) ou l'agencement réglable (21) entraîne directement ou indirectement, lors d'un déplacement de la position de fonctionnement dans la position de non fonctionnement, le dispositif de raccordement par prise (39) dans sa position de repos et/ou lors d'un déplacement de la position de non fonctionnement dans la position de fonctionnement, le dispositif de raccordement par prise (39) dans sa position de travail.

21. Dispositif de raccordement selon la revendication 20, **caractérisé en ce qu'**une section de bras d'attelage (19) s'étendant entre la boule d'attelage (17) et une partie support (18) côté véhicule du bras d'attelage (16) entraîne le dispositif de raccordement par prise (39).

22. Dispositif de raccordement selon la revendication 20 ou 21, **caractérisé en ce que** l'agencement réglable (21) déplace le bras d'attelage (16) dans une position oblique inclinée vers le bas par rapport à la position de fonctionnement pour saisir par en dessous le dispositif de raccordement par prise (39) lors d'un déplacement de la position de fonctionnement à la position de non fonctionnement.

23. Dispositif de raccordement selon l'une des revendications précédentes, **caractérisé en ce que** le dispositif de raccordement par prise (39) comporte une prise de courant (46) placée sur un dispositif support (44), en particulier une plaque de support (45).

24. Attelage ayant un dispositif de raccordement (12) selon l'une des revendications précédentes.
